# EUROPÄISCHE PATENTSCHRIFT

(11) **EP 3 015 291 B1**
(45) Veröffentlichungstag und Bekanntmachung des Hinweises auf die Patenterteilung: **06.12.2017**
(21) Anmeldenummer: 15174728.4
(22) Anmeldetag: 01.07.2015
(51) Int. Cl.: B60C 11/24

(54) **FAHRZEUGLUFTREIFEN**
PNEUMATIC TYRES FOR A VEHICLE
PNEUMATIQUES DE VEHICULE

(30) Priorität: 28.10.2014 DE 102014221900
(43) Veröffentlichungstag der Anmeldung: 04.05.2016
(73) Patentinhaber: Continental Reifen Deutschland GmbH, 30165 Hannover (DE)
(72) Erfinder: Behr, Ulrich, 30167 Hannover (DE); Wies, Burkhard, 30455 Hannover (DE)
(74) Vertreter: Finger, Karsten

(56) Entgegenhaltungen:
- US-A- 2 706 509

## Beschreibung

Die Erfindung betrifft einen Fahrzeugluftreifen mit einem Laufstreifen mit mindestens einem Abriebsindikator, welcher in einer durch einen Nutgrund und zwei Nutflanken begrenzten Umfangsnut positioniert ist, wobei der Abriebsindikator drei Indikatorteile aufweist, welche in unterschiedlichen vom Nutgrund in radialer Richtung ermittelten Höhen befindliche im Wesentlichen parallel zur Laufstreifenoberfläche verlaufende Indikatorflächen aufweisen, wobei der radial innerste die größte und der radial äußerste Indikatorteil die kleinste Indikatorfläche aufweist, wobei zumindest der radial innerste Indikatorteil an eine Nutflanke angebunden ist und plattenförmig ausgeführt ist, und wobei auf der Indikatorfläche des radial innersten Indikatorteils die beiden weiteren Indikatorteile übereinander, der äußere mittig auf dem inneren, positioniert sind.

Es ist üblich, Laufstreifen von Fahrzeugluftreifen mit Abriebsindikatoren (Tread-Wear-Indikatoren), welche die gesetzliche Mindestprofiltiefe - 1,6 mm bei PKW-Sommerreifen - optisch anzeigen, zu versehen. Da sich bei Sommerreifen bereits ab Profiltiefen von etwa 3 mm bis 4 mm die Fahreigenschaften, insbesondere bei Nässe, verschlechtern und daher die Gefahr von Aquaplaning zunimmt, ist es sinnvoll, den Reifen bereits vor Erreichen der Mindestprofiltiefe zu wechseln. Daher werden Reifen mit Abriebsindikatoren ausgestattet, welche sicherheitsrelevante Abriebszustände entsprechend aufzeigen.

Ein Fahrzeugluftreifen der eingangs genannten Art ist beispielsweise aus der US 2 706 509 A bekannt. In einer Umfangsnut des Laufstreifens befindet sich ein Abriebsindikator mit stufenartig übereinander angeordneten Indikatorteilen, deren Indikatorflächen unterschiedlich große Kreisringsegmente sind.

Aus der US 2011/0079333 ist ein weiterer Reifen, dessen Laufstreifen mit einem Abriebsindikator ausgestattet ist, bekannt. Der Abriebsindikator weist in radialer Richtung zumindest zwei Indikatorteile mit in unterschiedlichen Höhen befindlichen Indikatorflächen auf. Die Indikatorteile können nebeneinander oder auch übereinander angeordnet sein. Die Höhe der einen Indikatorfläche korreliert vorzugsweise mit der Mindestprofiltiefe in den USA und die der anderen mit der Mindestprofiltiefe in China. Die Indikatorflächen sind ferner mit Aufschriften versehen, welche jeweils einen Hinweis auf die in diesen Ländern geltenden Standards, welche die Mindestprofiltiefe festlegen, liefern.

Aus der DE 36 27 832 A1 ist ein Fahrzeugluftreifen bekannt, bei dem von einer Nut ausgehende Einschnitte eine Seitenfläche aufweisen, die mit einer Vielzahl von Stufen versehen ist. Der derartig gebildete Abriebsindikator soll die Beurteilung des Abnutzungsgrades vereinfachen.

Der aus der DE 10 2008 024 075 A1 bekannte Abriebsindikator setzt sich aus quer zur Erstreckung einer Umfangsnut angeordneten Indikatorteilen zusammen, welche zumindest drei in unterschiedlichem Abstand vom Nutgrund befindliche Indikatorflächen aufweisen. Die Indikatorflächen weisen unterschiedliche Größen und/oder Formen auf. Ein solcher Indikator soll keinen wesentlichen Einfluss auf das Wasserdrainagevermögen haben und leicht zu erkennen sein.

Der Erfindung liegt die Aufgabe zugrunde, einen gegenüber Rissbildung besonders stabilen Abriebsindikator zur Verfügung zu stellen, welcher gleichzeitig auch strömungsgünstig gestaltet sein soll.

Gelöst wird die gestellte Aufgabe erfindungsgemäß dadurch, dass die beiden weiteren Indikatorteile in Draufsicht Y-förmig mit jeweils drei Armen ausgebildet sind.

Der erfindungsgemäße Abriebsindikator ist daher derart gestaltet, dass seiner Indikatorteile vom radial äußersten zum radial innersten stabiler und mit schrittweise größer werdender Indikatorfläche ausgeführt sind. Insbesondere der radial innerste Indikatorteil bildet eine stabile Basis für die weiteren Indikatorteile und vermeidet das Einreißen des Gummimaterials an den Übergangskanten zum Nutgrund und zur Nutflanke.

Für die Stabilität des Abriebsindikators ist es ferner vorteilhaft, wenn die beiden weiteren Indikatorteile an dieselbe Nutflanke angebunden sind wie der radial innerste Indikatorteil.

Vorteilhafterweise werden die beiden weiteren Indikatorteile derart geometrisch ausgeführt, dass sie an je zwei Stellen mit der Nutflanke verbunden sind.

Bevorzugter Weise weisen dabei die drei Arme des radial äußeren Indikatorteils eine Breite auf, die geringer ist als die Breite der Arme des anderen Indikatorteils.

Für die Stabilität und um das Entstehen von Einrissen zu verhindern ist es ferner vorteilhaft, wenn die Breite der drei Arme des radial äußeren Indikatorteils 2,0 mm bis 3,0 mm und die Breite der drei Arme des radial inneren Indikatorteils 3,0 mm bis 4,0 mm beträgt.

Werden erfindungsgemäß ausgeführte Abriebsindikatoren in Umfangsnuten von PKW-Sommerreifen ausgebildet, erfolgt die Ausführung der Abriebsindikatoren derart, dass sich die Indikatorfläche des radial innersten Indikatorteils in einer Höhe von 1,6 mm befindet, wobei diese Höhe vom Nutgrund in radialer Richtung ermittelt wird. Bei solchen Reifen befindet sich ferner bevorzugt die Indikatorfläche des auf dem radial innersten Indikatorteil angeordneten Indikatorteils in einer Höhe von 2,5 mm bis 3,3 mm, wobei diese Höhe ebenfalls vom Nutgrund in radialer Richtung ermittelt wird. Das Abreiben des ersten Indikatorteils gibt daher einen Hinweis darauf, dass die Gefahr von Aquaplaning durch die Verringerung des Wasserdrainagevermögens des Laufstreifenprofils erhöht ist.

Weitere Merkmale, Vorteile und Einzelheiten der Erfindung werden nun anhand der Zeichnung, die schematisch eine Ausführungsform der Erfindung darstellt, näher beschrieben. Dabei zeigen
Fig. 1 einen Ausschnitt eines Laufstreifens in Schrägansicht mit einer Ausführungsvariante eines Abriebsindikators gemäß der Erfindung,
Fig. 2 eine Draufsicht auf den Abriebsindikator der Fig. 1 und
Fig. 3 einen Schnitt entlang der Linie III-III der Fig. 2.

Die Erfindung befasst sich mit der Ausgestaltung und Anordnung eines Abriebsindikators im Laufstreifen eines Fahrzeugluftreifens für Personenkraftwagen oder Vans, insbesondere einen sogenannten Sommerreifen.

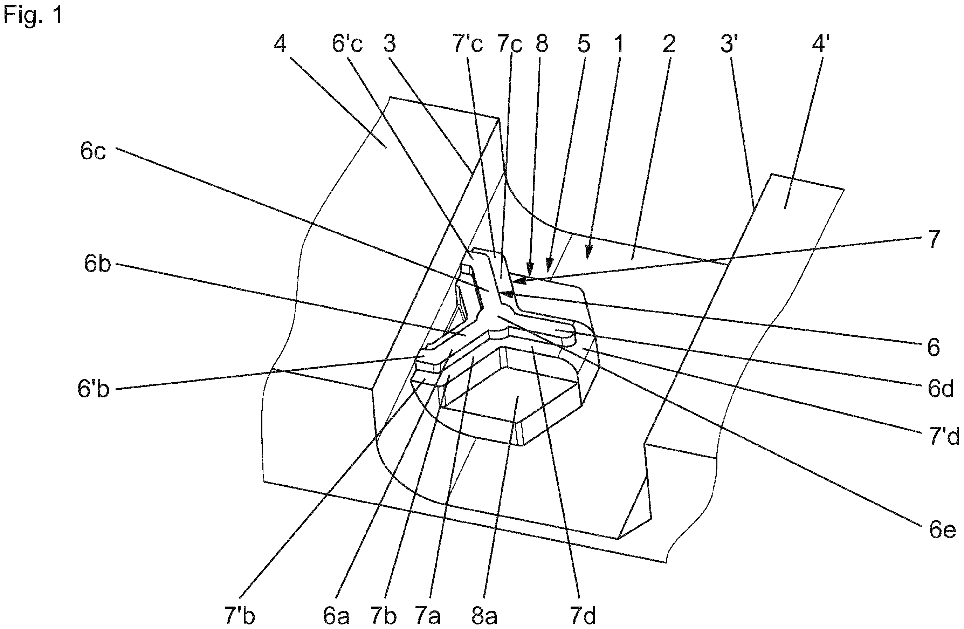

In dem in Fig.1 gezeigten Ausschnitt eines Laufstreifens sind eine in Umfangsrichtung umlaufende Umfangsnut 1, welche von einem Nutgrund 2 und zwei Nutflanken 3, 3' begrenzt ist, sowie seitlich der Umfangsnut 1 anschließende Teilbereiche zweier Profilpositive 4, 4', welche beispielsweise Profilblöcke sind, und ein in der Umfangsnut 1 positionierter Abriebsindikator 5 dargestellt. Erfindungsgemäße Abriebsindikatoren 5 sind vorzugsweise in sämtlichen Umfangsnuten sowie innerhalb der Umfangsnuten in definierten Abständen zueinander angeordnet.

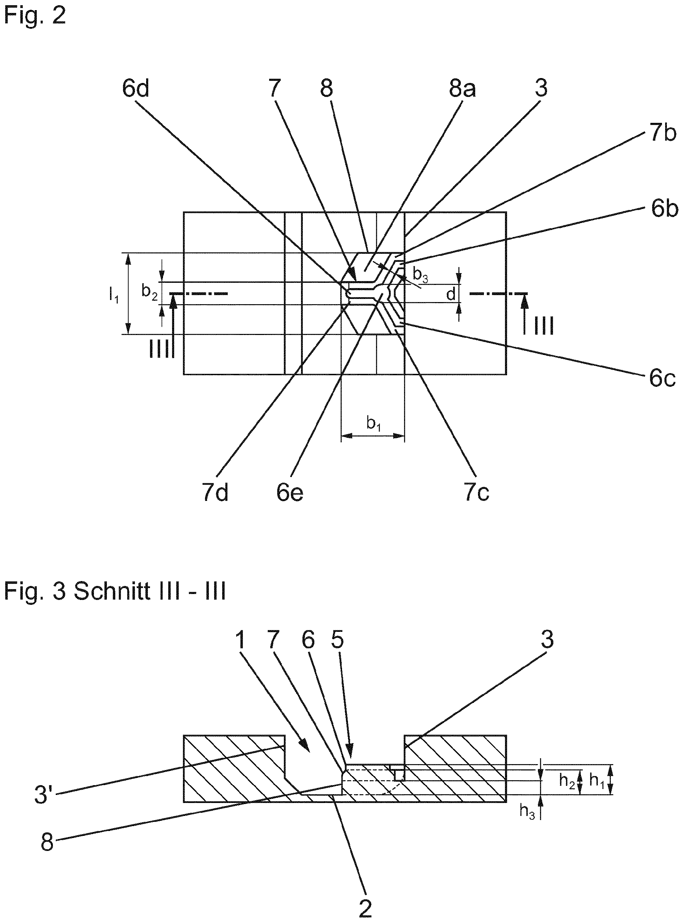

Der Abriebsindikator 5 ist am Nutgrund 2 positioniert, erstreckt sich entlang einer der Nutflanken 3, 3', hier der Nutflanke 3, und setzt sich aus drei Indikatorteilen, einem ersten, radial äußersten Indikatorteil 6, einem zweiten, mittleren Indikatorteil 7 und einem drittem, radial innersten Indikatorteil 8 zusammen. Die Indikatorteile 6, 7, 8 reichen in radialer Richtung in unterschiedliche Höhen h₁, h₂, h₃ (Fig. 3), welche ausgehend von der tiefsten Stelle des Nutgrundes 2 ermittelt werden und sind durch je eine im Wesentlichen parallel zur Laufstreifenoberfläche verlaufende Indikatorfläche 6a, 7a, 8a begrenzt.

Wie Fig. 1 und Fig. 2 zeigen ist der dritte Indikatorteil 8 plattenförmig sowie, in Draufsicht, im Wesentlichen in Form eines Vieleckes, beispielsweise in Form eines Sechseckes, ausgebildet und besitzt eine in Umfangsrichtung ermittelte maximale Erstreckungslänge l₁ von insbesondere 8,0 mm bis 12,0 mm, vorzugsweise von zirka 10 mm, wobei der Indikatorteil 8 diese maximale Erstreckungslänge l₁ vorzugsweise auch entlang der Nutflanke 3 aufweist. Der Indikatorteil 8 weist eine in axialer Richtung ermittelte maximale Breite b₁ von vorzugsweise 6,0 mm bis 10,0 mm, insbesondere von zirka 8 mm, auf. Die Höhe h₃ entspricht der gesetzlichen Mindestprofiltiefe von 1,6 mm. Abweichend von der gezeigten Ausführung kann der Indikatorteil 8, in Draufsicht, auch gerundet ausgeführt sein.

Der zweite Indikatorteil 7 befindet sich auf der Indikatoroberfläche 8a des Indikatorteils 8 ohne diese zu überragen und reicht in radialer Richtung bis in die Höhe h₂ (Fig. 3) von ca. 2,5 mm bis 3,3 mm, insbesondere von 3,0 mm, und ist, in Draufsicht, Y-förmig ausgebildet. Bedingt durch die Y-Form weist der Indikatorteil 7 drei gerade verlaufende Arme 7b, 7c, 7d auf, wobei die Arme 7b, 7c vom Arm 7d ausgehend V-förmig zur Nutflanke 3 verlaufen, an welche sie jeweils über einen abgeknickten sowie im Wesentlichen in axialer Richtung verlaufenden Endabschnitt 7'b, 7'c angebunden sind. Der Arm 7d erstreckt sich in axialer Richtung bis zum Rand des Indikatorteils 8 und weist einen abgerundeten Endabschnitt 7'd auf. Sämtliche Arme 7b, 7c, 7d des zweiten Indikatorteils 7 weisen eine im Wesentlichen konstante und übereinstimmende Breite b₂ (Fig. 2) von 3,0 mm bis 4,0 mm auf, wobei die Breite b₂ jeweils quer zur Erstreckungsrichtung der Arme 7b, 7c, 7d ermittelt wird.

Der radial äußerste, erste Indikatorteil 6 ist ebenfalls Y-förmig ausgebildet und befindet sich mittig auf dem zweiten Indikatorteil 7, seine Höhe h₁ (Fig. 3) beträgt vorzugsweise 3,6 mm. Der Indikatorteil 6 weist ebenfalls drei Arme 6b, 6c, 6d auf, welche sich analog zu den Armen 7b, 7c, 7d des zweiten Indikatorteils 7 erstrecken, wobei die Arme 6b, 6c mit der Nutflanke 3 verbunden sind und abgeknickte Endabschnitte 6'b, 6'c aufweisen. Die drei Arme 6b, 6b, 6d gehen von einem beispielsweise zylindrischen Mittelteil 6e aus und besitzen eine im Wesentlichen konstante und übereinstimmende Breite b₃ < b₂ (Fig. 2) von 2,0 mm bis 3,0 mm. Der zylindrische Mittelteil 6e weist einen Durchmesser d (Fig. 2) von beispielsweise 1,5 mm auf.

Wird ein Laufstreifen, welcher erfindungsgemäß ausgeführte Abriebsindikatoren 5 enthält, auf eine Profiltiefe abgefahren, die der Höhe h₂ entspricht, ist der erste Indikatorteil 6 vollständig abgerieben. Ab dieser Profiltiefe kann üblicherweise davon ausgegangen werden, dass das Wasserdrainagevermögen des Laufstreifenprofils merkbar verringert ist, sodass die Gefahr von Aquaplaning erhöht ist. Wird der Laufstreifen so weit abgerieben, dass die gesetzliche Mindestprofiltiefe von 1,6 mm erreicht ist, ist der zweite Indikatorteil 7 vollständig abgerieben, sodass der Abriebsindikator 5 nur mehr aus dem plattenförmigen radial innersten bzw. dritten Indikatorteil 8 besteht.

### Bezugsziffernliste

- 1: Umfangsnut
- 2: Nutgrund
- 3: Nutflanke
- 3': Nutflanke
- 4: Profilpositiv
- 4': Profilpositiv
- 5: Abriebsindikator
- 6: Indikatorteil
- 6a: Indikatorfläche
- 6b: Arm
- 6'b: Endabschnitt
- 6c: Arm
- 6'c: Endabschnitt
- 6d: Arm
- 6e: Mittelteil
- 7: Indikatorteil
- 7a: Indikatorfläche
- 7b: Arm
- 7'b: Endabschnitt
- 7c: Arm
- 7'c: Endabschnitt
- 7d: Arm
- 7'd: Endabschnitt
- 8: Indikatorteil
- 8a: Indikatorfläche
- b₁, b₂, b₃: Breite
- d: Durchmesser
- l₁: Länge

## Patentansprüche

1. Fahrzeugluftreifen mit einem Laufstreifen mit mindestens einem Abriebsindikator (5), welcher in einer durch einen Nutgrund (2) und zwei Nutflanken (3, 3') begrenzten Umfangsnut (1) positioniert ist, wobei der Abriebsindikator (5) drei Indikatorteile (6, 7, 8) aufweist, welche in unterschiedlichen vom Nutgrund (2) in radialer Richtung ermittelten Höhen (h₁, h₂, h₃) befindliche, im Wesentlichen parallel zur Laufstreifenoberfläche verlaufende Indikatorflächen (6a, 7a, 8a) aufweisen, wobei der radial innerste die größte und der radial äußerste Indikatorteil (8, 6) die kleinste Indikatorfläche (6a, 7a, 8a) aufweist, wobei zumindest der radial innerste Indikatorteil (8) an eine Nutflanke (3) angebunden ist und plattenförmig ausgeführt ist, und wobei auf der Indikatorfläche (8a) des radial innersten Indikatorteils (8) die beiden weiteren Indikatorteile (6, 7) übereinander, der äußere mittig auf dem inneren, positioniert sind,
**dadurch gekennzeichnet,**
**dass** die beiden weiteren Indikatorteile (6, 7) in Draufsicht Y-förmig mit jeweils drei Armen (6b, 6c, 6d; 7b, 7c, 7d) ausgebildet sind.

2. Fahrzeugluftreifen nach Anspruch 1, **dadurch gekennzeichnet, dass** die beiden weiteren Indikatorteile (6, 7) an dieselbe Nutflanke (3) angebunden sind wie der radial innerste Indikatorteil (8).

3. Fahrzeugluftreifen nach Anspruch 1 oder 2, **dadurch gekennzeichnet, dass** die beiden weiteren Indikatorteile (6, 7) an je zwei Stellen mit der Nutflanke (3) verbunden sind.

4. Fahrzeugluftreifen nach einem der Ansprüche 1 bis 3, **dadurch gekennzeichnet, dass** die drei Arme (6b, 6c, 6d) des radial äußeren Indikatorteils (6) der Y-förmig ausgebildeten Indikatorteile (6, 7) eine Breite (b₃) aufweisen, die geringer ist als die Breite (b₂) der Arme (7b, 7c, 7d) des anderen Indikatorteils (7).

5. Fahrzeugluftreifen nach einem der Ansprüche 1 bis 4, **dadurch gekennzeichnet, dass** die Breite (b₃) der drei Arme (6b, 6c, 6d) des radial äußeren Indikatorteils (6) 2,0 mm bis 3,0 mm beträgt.

6. Fahrzeugluftreifen nach einem der Ansprüche 1 bis 4, **dadurch gekennzeichnet, dass** die Breite (b₂) der drei Arme (7b, 7c, 7d) des radial inneren Indikatorteils (7) 3,0 mm bis 4,0 mm beträgt.

7. Fahrzeugluftreifen nach einem der Ansprüche 1 bis 6, **dadurch gekennzeichnet, dass** sich die Indikatorfläche (8a) des radial innersten Indikatorteils (8) in einer Höhe (h₃) von 1,6 mm befindet, wobei die Höhe (h₃) vom Nutgrund (2) in radialer Richtung ermittelt wird.

8. Fahrzeugluftreifen nach einem der Ansprüche 1 bis 7, **dadurch gekennzeichnet, dass** sich die Indikatorfläche (7a) des auf dem radial innersten Indikatorteil (8) angeordneten Indikatorteils (7) in einer Höhe (h₂) von 2,5 mm bis 3,3 mm befindet, wobei die Höhe (h₂) vom Nutgrund (2) in radialer Richtung ermittelt wird.

## Claims

1. Pneumatic vehicle tyre comprising a tread with at least one abrasion indicator (5), which is positioned in a circumferential groove (1) delimited by a groove base (2) and two groove flanks (3 3'), the abrasion indicator (5) having three indicator parts (6, 7, 8), which have indicator areas (6a, 7a, 8a) running substantially parallel to the tread surface and located at different heights (h₁, h₂, h₃) determined in the radial direction from the groove base (2), the radially innermost indicator part (8) having the largest and the radially outermost indicator part (6) having the smallest indicator area (6a, 7a, 8a), at least the radially innermost indicator part (8) being attached to a groove flank (3) and designed in the form of a flat surface, and the two further indicator parts (6, 7) being positioned one over the other on the indicator area (8a) of the radially innermost indicator part (8), the outer one centrally on the inner one,
**characterized in that**
the two further indicator parts (6, 7) are formed in a Y-shaped manner in plan view, with in each case three arms (6b, 6c, 6d; 7b, 7c, 7d).

2. Pneumatic vehicle tyre according to Claim 1, **characterized in that** the two further indicator parts (6, 7) are attached to the same groove flank (3) as the radially innermost indicator part (8).

3. Pneumatic vehicle tyre according to Claim 1 or 2, **characterized in that** the two further indicator parts (6, 7) are connected to the groove flank (3) at two locations in each case.

4. Pneumatic vehicle tyre according to one of Claims 1 to 3, **characterized in that** the three arms (6b, 6c, 6d) of the radially outer indicator part (6) of the indicator parts (6, 7) formed in a Y-shaped manner have a width (b₃) which is smaller than the width (b₂) of the arms (7b, 7c, 7d) of the other indicator part (7).

5. Pneumatic vehicle tyre according to one of Claims 1 to 4, **characterized in that** the width (b₃) of the three arms (6b, 6c, 6d) of the radially outer indicator part (6) is 2.0 mm to 3.0 mm.

6. Pneumatic vehicle tyre according to one of Claims 1 to 4, **characterized in that** the width (b₂) of the three arms (7b, 7c, 7d) of the radially inner indicator part (7) is 3.0 mm to 4.0 mm.

7. Pneumatic vehicle tyre according to one of Claims 1 to 6, **characterized in that** the indicator area (8a) of the radially innermost indicator part (8) is at a height (h₃) of 1.6 mm, the height (h₃) being determined in the radial direction from the groove base (2).

8. Pneumatic vehicle tyre according to one of Claims 1 to 7, **characterized in that** the indicator area (7a) of the indicator part (7) arranged on the radially innermost indicator part (8) is located at a height (h₂) of 2.5 mm to 3.3 mm, the height (h₂) being determined in the radial direction from the groove base (2).

## Revendications

1. Pneumatique de véhicule avec une bande de roulement avec au moins un indicateur d'usure (5) positionné dans une rainure périphérique (1) délimitée par une base de rainure (2) et deux flancs de rainure (3, 3'), l'indicateur d'usure (5) comportant trois parties d'indicateur (6, 7, 8) comportant des surfaces d'indicateur (6a, 7a, 8a) s'étendant pour l'essentiel parallèlement à la surface de bande de roulement et se trouvant à des hauteurs déterminées différentes en partant de la base de rainure (2) dans la direction radiale (h₁, h₂, h₃), la partie la plus à l'intérieur dans le plan radial comportant la plus grande partie et la partie d'indicateur (8, 6) la plus à l'extérieur dans le plan radial comportant la plus petite surface d'indicateur (6a, 7a, 8a), au moins la partie d'indicateur (8) la plus à l'intérieur dans le plan radial étant raccordée au niveau d'un flanc de rainure (3) et étant réalisée en forme de plaque et les deux parties d'indicateur (6, 7) supplémentaires étant positionnées l'une au-dessus de l'autre, l'extérieure au centre sur l'intérieure, sur la surface d'indicateur (8a) de la partie d'indicateur (8) la plus à l'intérieur dans le plan radial, **caractérisé en ce que** les deux parties d'indicateur (6, 7) supplémentaires sont réalisées en forme de Y en vue en élévation avec respectivement trois bras (6b, 6c, 6d ; 7b, 7c, 7d).

2. Pneumatique de véhicule selon la revendication 1, **caractérisé en ce que** les deux parties d'indicateur (6, 7) supplémentaires sont raccordées au même flanc de rainure (3) que la partie d'indicateur (8) la plus à l'intérieure dans le plan radial.

3. Pneumatique de véhicule selon la revendication 1 ou 2, **caractérisé en ce que** les deux parties d'indicateur (6, 7) supplémentaires sont reliées en respectivement deux points au flanc de rainure (3).

4. Pneumatique de véhicule selon l'une quelconque des revendications 1 à 3, **caractérisé en ce que** les trois bras (6b, 6c, 6d) de la partie d'indicateur (6) extérieure dans le plan radial des parties d'indicateur (6, 7) réalisées en forme de Y présentent une largeur (b₃) inférieure à la largeur (b₂) des bras (7b, 7c, 7d) de l'autre partie d'indicateur (7).

5. Pneumatique de véhicule selon l'une quelconque des revendications 1 à 4, **caractérisé en ce que** la largeur (b₃) des trois bras (6b, 6c, 6d) de la partie d'indicateur (6) extérieure dans le plan radial fait 2,0 mm à 3,0 mm.

6. Pneumatique de véhicule selon l'une quelconque des revendications 1 à 4, **caractérisé en ce que** la largeur (b₂) des trois bras (7b, 7c, 7d) de la partie d'indicateur (7) intérieure dans le plan radial fait 3,0 mm à 4,0 mm.

7. Pneumatique de véhicule selon l'une quelconque des revendications 1 à 6, **caractérisé en ce que** la surface d'indicateur (8a) de la partie d'indicateur (8) la plus à l'intérieur dans le plan radial se trouve à une hauteur (h₃) de 1,6 mm, la hauteur (h₃) étant calculée en partant de la base de rainure (2) dans la direction radiale.

8. Pneumatique de véhicule selon l'une quelconque des revendications 1 à 7, **caractérisé en ce que** la surface d'indicateur (7a) de la partie d'indicateur (7) disposée sur la partie d'indicateur (8) la plus à l'intérieur dans le plan radial se trouve à une hauteur (h₂) de 2,5 mm à 3,3 mm, la hauteur (h₂) étant calculée à partir de la base de rainure (2) dans la direction radiale.
